# FASCICULE DE BREVET EUROPEEN

(11) **EP 1 524 191 B1**
(45) Date de publication et mention de la délivrance du brevet: **06.09.2006**
(21) Numéro de dépôt: 04104852.1
(22) Date de dépôt: 04.10.2004
(51) Int. Cl.: B64D 45/04, G01S 5/14

(54) **Procédé de guidage d'un aéronef en phase d'approche et balise sol correspondante**
Flugführungsverfahren für den Landeanflug und zugehörige Bodenstation
Landing navigation method and corresponding ground station

(30) Priorité: 17.10.2003 FR 0312185
(43) Date de publication de la demande: 20.04.2005
(73) Titulaire: Thales, 92200 Neuilly Sur Seine (FR)
(72) Inventeur: Arethens, Jean-Pierre, 94117 ARCUEIL Cedex (FR)
(74) Mandataire: Beylot, Jacques

(56) Documents cités:
- DE-A- 10 141 595
- US-A- 5 786 773
- US-A- 6 023 239
- US-B1- 6 531 981

## Description

L'invention concerne un procédé de guidage d'un aéronef en phase d'approche et une balise sol pour la mise en oeuvre du procédé.

Le domaine de l'invention est celui du guidage d'un aéronef en phase d'approche.

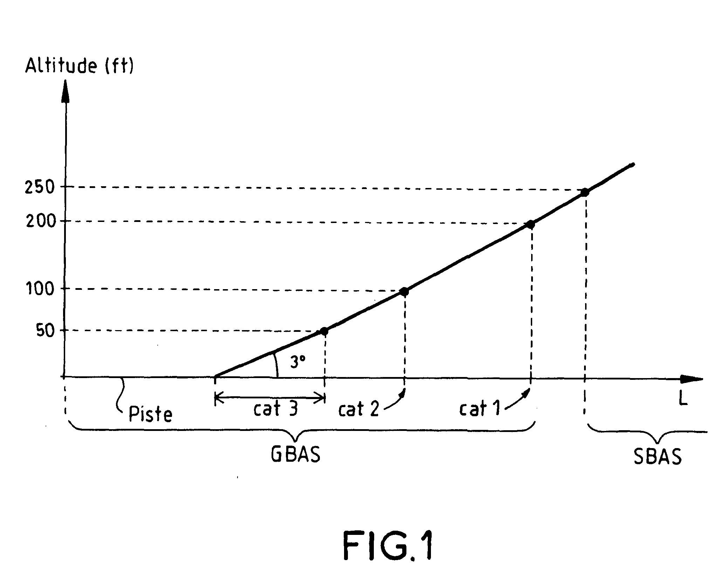

On désigne par approche finale ou approche de précision, la phase de guidage pendant laquelle l'aéronef est amené selon une trajectoire prédéterminée et dans des conditions de visibilité bien définies à une certaine hauteur relativement à la piste d'atterrissage. Cette approche est dite de catégorie 1 quand l'aéronef est amené à 200 pieds, de catégorie 2 quand l'aéronef est amené jusqu'à 100 pieds et de catégorie 3 si l'aéronef est amené à 50 pieds ou moins, comme illustré figure 1.

Au-dessus de 250 pieds, il s'agit d'approche de non précision à laquelle correspond un guidage vertical.

Le guidage en approche finale ou de non précision est basé sur l'utilisation d'une part de balises sol et d'autre part d'un récepteur « MMR » (ou « MultiMode Receiver » en anglais) embarqué à bord de l'aéronef et recevant des messages de ces balises. Le récepteur « MMR » est aussi relié à un système GNSS de positionnement différentiel. Les balises sol peuvent être des balises GBAS (« Ground Based Augmentation System » en anglais) ou SBAS (« Space Based Augmentation System » en anglais).

Les systèmes GBAS et SBAS sont des systèmes d'augmentation de la précision du positionnement obtenu par le système GNSS.

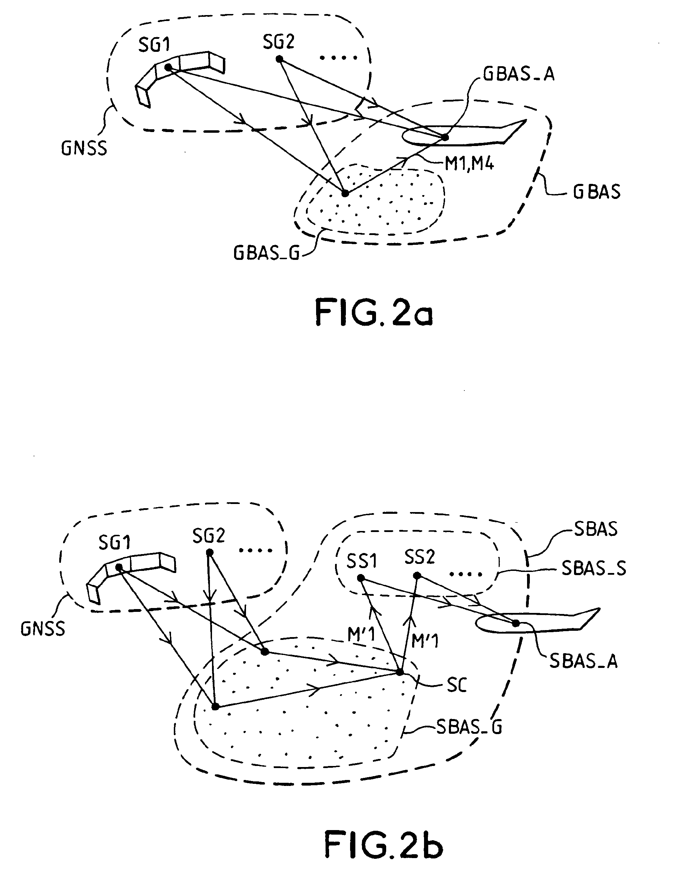

Le système GBAS est essentiellement destiné aux approches de précision comme indiqué figure 1. Il comprend comme illustré figure 2a un sous-système de balises sol GBAS-G et un sous-système de récepteurs GBAS-A embarqués à bord des aéronefs. Une balise sol GBAS peut être reliée à un nombre illimité de récepteurs embarqués, compris dans son rayon d'action. Ces balises sol sont installées en fonction des besoins ; elles sont par exemple situées dans des zones d'aéroport. Le système GNSS fournit aux aéronefs et aux balises sol des informations pour calculer des pseudo-distances. La balise sol fournit à l'aéronef :
- des données sur les trajectoires d'approche idéales pour chaque piste d'atterrissage sous forme de segments d'approche finale (« FAS », « Final Approach Segments » en anglais),
- d es informations de corrections des pseudo-distances (pour corriger les effets atmosphériques, les trajets multiples, etc) et,
- des informations sur l'intégrité du positionnement différentiel pour chaque satellite GNSS en vue.

Ces données et informations permettent à l'aéronef de déterminer plus précisément sa position par rapport à la trajectoire d'approche.

Le système SBAS est essentiellement destiné aux approches de non précision. Il comprend comme illustré figure 2b une infrastructure sol SBAS-G, des satellites géo-stationnaires SBAS désignés SBAS-S et un récepteur SBAS-A embarqué à bord de chaque aéronef. L'infrastructure sol SBAS-G comprend :
- une pluralité de stations de réception réparties sur une large zone géographique, qui reçoivent les données des satellites GNSS et déterminent les pseudo-distances, et
- une station centrale SC de contrôle et de traitement, qui à partir des pseudo-distances émises par les stations de réception, détermine les corrections et l'intégrité qui sont regroupées dans un signal SBAS.

Les satellites SBAS-S relaient ce signal SBAS de la station centrale vers les récepteurs des aéronefs. Le récepteur de l'aéronef utilise ce signal SBAS pour déterminer l'intégrité de sa position et améliorer sa précision. On peut citer comme exemples de systèmes SBAS, le système européen EGNOS (« European Global Navigation Overlay Service »), le système nord-américain WAAS (« Wide Aera Augmentation System »).

Le récepteur « MMR » à bord de l'aéronef est apte à recevoir aussi bien les signaux émis par les balises GBAS que ceux émis par une station centrale SBAS-G et relayés par les satellites SBAS-S.

Les balises GBAS fournissent des corrections plus précises que celles d'une station centrale SBAS. De plus les balises GBAS sont sous l'autorité du service de contrôle aérien qui peut ainsi contrôler l'émission de ces balises en fonction de l'intégrité et de la précision de la position requises. En outre, les balises GBAS fournissent en plus des corrections, des informations de trajectoire d'approche idéale (« FAS »).

Les balises sol de type GBAS sont donc utilisées pour les approches finales, alors que les stations de type SBAS (« Space Based Augmentation System » en anglais) sont utilisées pour les approches de non précision.

On va décrire plus en détail le guidage d'un aéronef dans le cadre d'une approche finale.

En approche finale le guidage est basé sur une trajectoire d'approche idéale et sur la position de l'aéronef par rapport à cette trajectoire. Plus l'aéronef se rapproche de la piste plus la position doit être précise et plus l'intégrité doit être élevée.

Le récepteur MMR reçoit des signaux radio-satellitaires de positionnement différentiel du système GNSS ; il reçoit aussi, provenant des balises, les corrections applicables à ces signaux et des informations concernant les trajectoires idéales. Sur instruction du service du contrôle aérien, l'équipage de l'aéronef sélectionne la trajectoire idéale désirée puis le récepteur calcule alors l'écart de guidage entre cette trajectoire idéale et la position corrigée de l'aéronef. Cet écart de guidage est alors transmis au pilote automatique qui ajuste la trajectoire de l'aéronef en conséquence.

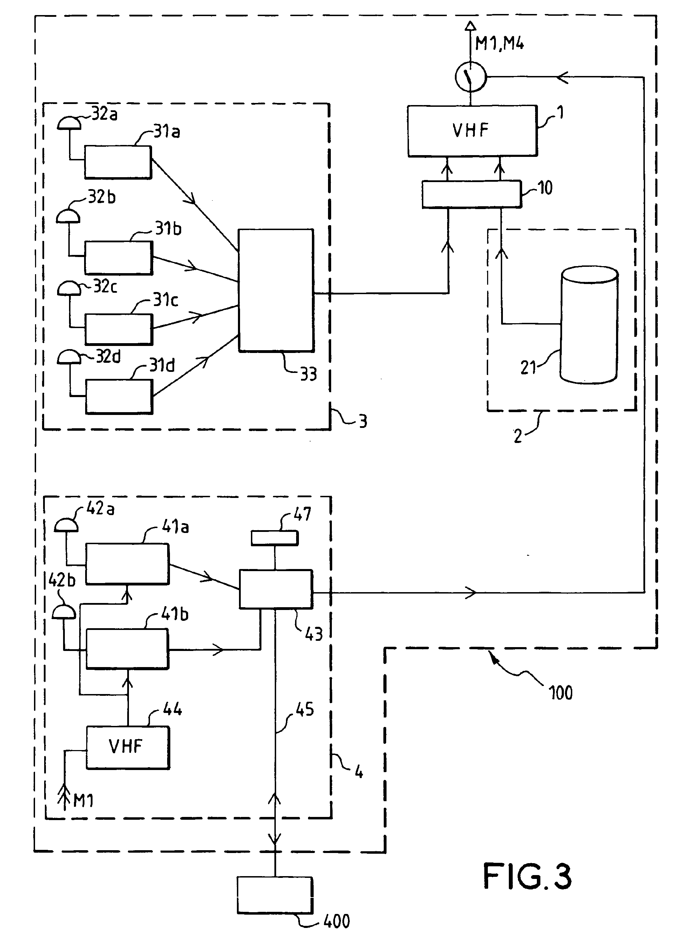

Les corrections et les informations de trajectoire idéale proviennent des balises GBAS. Une balise sol GBAS 100 comprend comme représenté figure 3, un émetteur 1 VHF précédé d'un élément de formattage de donnés 10, relié à un dispositif 2 apte à fournir les informations de trajectoires idéales (« FAS ») qui sont émises par l'émetteur 1 sous la forme d'un message M4 ; l'élément de formattage 10 est également relié à un dispositif 3 apte à calculer les corrections qui sont émises par l'émetteur 1 sous la forme d'un message M1.

Le dispositif 2 comprend une base de données 21 comportant les trajectoires idéales des pistes d'atterrissage. Les trajectoires idéales sont transmises à l'émetteur 1 après formattage.

Le dispositif 3 comprend des récepteurs de référence aptes à recevoir des signaux radio-satellitaires de positionnement différentiel du système GNSS, en général 4 récepteurs 31a, 31b, 31c, 31d respectivement munis de leurs antennes 32a, 32b, 32c, 32d. Chaque récepteur de référence calcule les corrections pour tous les satellites en vue. Le dispositif 3 comprend également un calculateur 33 qui vérifie ces corrections et élimine les mesures aberrantes puis calcule une correction moyenne pour tous les satellites. Ces corrections sont alors transmises à l'émetteur 1 après formattage.

La balise comprend de préférence aussi un dispositif 4 de contrôle de l'émission des messages M1 et M4, aussi dénommé moniteur de position. Il comprend des récepteurs de signaux radio-satellitaires de positionnement différentiel du système GNSS, par exemple deux récepteurs 41a et 41b respectivement munis de leurs antennes 42a et 42b et qui déterminent la position de la balise et un récepteur VHF 44 du message M1 comportant les corrections. Ces corrections sont fournies aux récepteurs 41a et 41b qui déterminent la position corrigée de la balise. Par ailleurs, la position de la balise est connue et stockée en mémoire 47 dans la balise. Un calculateur 43 calcule la différence entre cette position connue et la position corrigée afin de déterminer l'intégrité du calcul de position. Les paramètres représentatifs de l'intégrité sont associés aux corrections dans le message M1 en vue d'être également transmis au récepteur de l'aéronef.

Ce dispositif 4 est relié au service du contrôle aérien 400 par voie filaire ou radio : les messages M1 et M4 sont transmis sous l'autorité de ce service. Lorsque l'intégrité est suffisante, c'est-à-dire est supérieure à une valeur déterminée par ce service, les messages M1 et M4 sont émis par l'émetteur 1 ; lorsqu'elle n'est pas suffisante, un commutateur commandé par le calculateur 43 coupe l'émission. Ce service peut aussi décider de couper l'émission par exemple en cas de vent, de brouillard, .... même lorsque l'intégrité semble suffisante.

L'aéronef qui ne reçoit plus ces messages réitère son approche ultérieurement ou utilise d'autres moyens d'approche.

Ce dispositif de contrôle 4 comprend de préférence plus d'un récepteur GNSS d'une part pour renforcer l'intégrité et d'autre part pour qu'en cas de panne de l'un des récepteurs, l'autre prenne le relais.

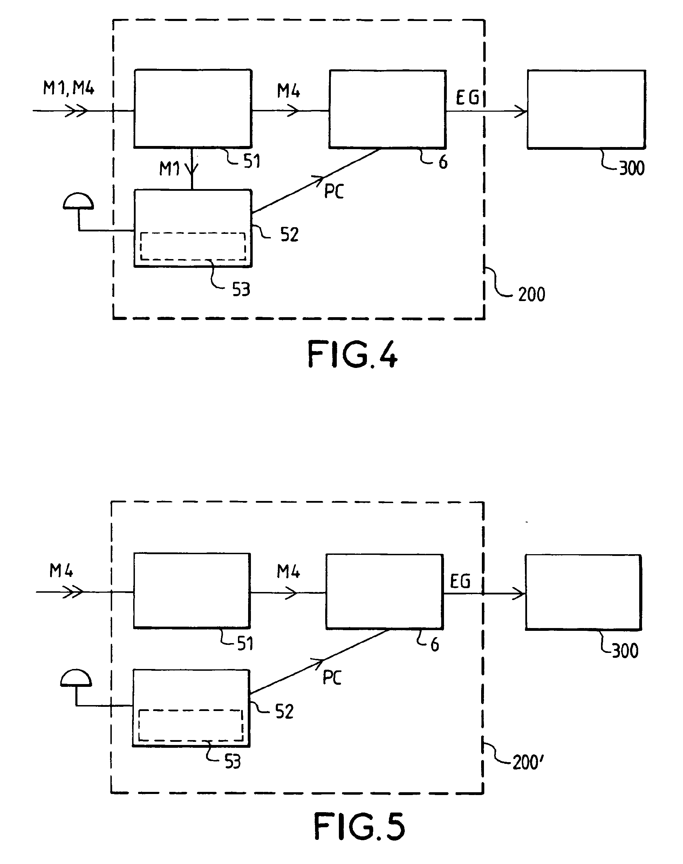

Un récepteur MMR 200 embarqué à bord de l'aéronef est schématiquement représenté figure 4. Il comporte divers dispositifs de réception de signaux parmi lesquels, un dispositif 51 de réception des signaux GBAS M1 et M4, un dispositif 52 de réception de signaux de positionnement différentiel GNSS apte à recevoir en outre les corrections M1 du dispositif 51 et à déterminer la position corrigée de l'aéronef, un calculateur 6 qui, à partir de M4 fourni par le dispositif 51 et de la position corrigée PC fournie par le dispositif 52, détermine l'écart de guidage EG et le transmet au pilote automatique 300. Cet écart de guidage EG inclut l'écart vertical, l'écart horizontal et la distance entre l'aéronef et le prochain point de passage obligé.

Les satellites SBAS ont les mêmes caractéristiques que les satellites GNSS. C'est pourquoi le dispositif de réception des signaux SBAS 53 fait partie du dispositif 52 de réception des signaux GNSS. Ce dispositif 53 de réception des signaux SBAS est inactif en phase d'approche finale.

Inversement, en phase d'approche de non précision, le dispositif 51 est inactif alors que le dispositif 53 est actif et le dispositif 52 détermine la position corrigée à partir des signaux GNSS et du signal SBAS contenant des corrections sous la forme d'un message M1' d'un format différent de celui de M1. Ces corrections sont quasiment les mêmes que celles provenant d'une balise GBAS. Le dispositif 52 transmet alors la position corrigée de l'aéronef au calculateur 6 qui détermine un écart de guidage vertical.

On souhaite pouvoir guider un aéronef par rapport à une trajectoire d'approche finale même lorsque celui-ci est situé à plus de 200 pieds, par exemple entre 250 et 200 pieds.

Mais les balises GBAS utilisées lors de l'approche finale sont coûteuses à acheter et à maintenir notamment en raison du coût des récepteurs GNSS.

Le document US-A-5-786 773 concerne un système d'augmentation de la précision du positionnement d'un aéronef en phase d'approche, utilisant un système de positionnement différentiel GPS. La station sol du système GPS différentiel émet sur un canal VHF, des informations de correction des signaux GPS () et des informations sur une trajectoire d'approche déterminée.

Le document US-B-6 531 981 concerne un système et une méthode de positionnement permettant de faire correspondre les corrections de premières mesures d'un satellite GPS avec des deuxièmes mesures du satellite reçues par un récepteur mobile.

Un but important de l'invention est donc de guider par rapport à une trajectoire d'approche finale, un aéronef situé à plus de 200 pieds sans utiliser des balises sol coûteuses.

Pour atteindre ce but, l'invention propose un procédé de guidage d'un aéronef en phase d'approche comportant les étapes consistant à :
recevoir des informations sur une trajectoire d'approche déterminée, ces informations étant contenues dans un message M4 provenant d'une balise sol émettant sur le même canal de transmission que celui d'une balise d'un système d'augmentation de la précision du positionnement de type GBAS,
recevoir des signaux radio-satellitaires de positionnement différentiel, et des informations de correction de ces signaux radio-satellitaires sous la forme d'un message M1' provenant d'une station centrale sol d'un système d'augmentation de la précision du positionnement de type SBAS, via des satellites géo-stationnaires de ce système d'augmentation,
calculer une position corrigée à partir des signaux de positionnement et des informations de correction,
calculer un écart de guidage vertical et horizontal de l'aéronef par rapport à la trajectoire d'approche déterminée, à partir de la position corrigée et des informations sur la trajectoire d'approche déterminée.

L'invention a aussi pour objet une balise sol pour la mise en oeuvre du procédé, comportant des moyens de stockage 21 d'informations sur des trajectoires d'approche déterminées, des moyens de formattage 10 de ces informations sous la forme d'un message M4, des moyens d'émission 1 du message M4 sur le même canal de transmission que celui d'une balise d'un système d'augmentation de la précision du positionnement de type GBAS, ne comportant pas de dispositif apte à calculer des corrections qui sont émises par l'émetteur.

Une telle balise est évidemment moins coûteuse que celle présentée dans le préambule et les informations de correction sont, elles émises sous la forme d'un message M1' par la station centrale SBAS qui est déjà installée.

Selon une caractéristique de l'invention, la balise sol comporte en outre des moyens de réception 42a, 42b de signaux radio-satellitaires de positionnement différentiel et de réception d'informations de correction de ces signaux radio-satellitaires, ces informations provenant, via des satellites SBAS, d'une station centrale sol d'un système d'augmentation de la précision du positionnement de type SBAS, des moyens 41a, 41b pour déterminer la position corrigée de la balise à partir des signaux radios-satellitaires et des informations de correction, des moyens 47 de stockage de la position connue de la balise, des moyens 43 pour déterminer l'intégrité du calcul de position en fonction de la position corrigée et de la position connue et des moyens 43 de contrôle de l'émission de la balise à partir de l'intégrité.

D'autres caractéristiques et avantages de l'invention apparaîtront à la lecture de la description détaillée qui suit, faite à titre d'exemple non limitatif et en référence aux dessins annexés dans lesquels :
la figure 1 déjà décrite représente schématiquement une trajectoire d'approche, sous la forme de l'altitude en fonction de la distance par rapport à la piste,
les figures 2a et 2b déjà décrites représentent schématiquement un système d'augmentation GBAS (2a) et SBAS(2b),
la figure 3 déjà décrite représente schématiquement une balise sol de type GBAS,
la figure 4 déjà décrite représente schématiquement un récepteur « MMR » embarqué à bord d'un aéronef et son fonctionnement,
la figure 5 représente schématiquement un récepteur « MMR » embarqué à bord d'un aéronef et son fonctionnement selon l'invention,
la figure 6 représente schématiquement une balise sol selon l'invention.

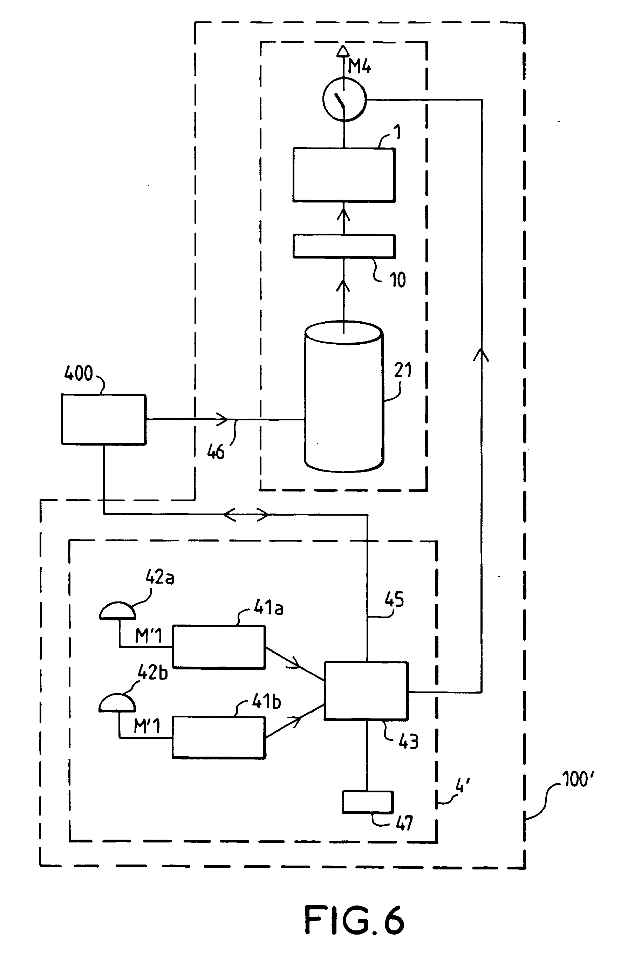

Le récepteur MMR embarqué à bord de l'avion représenté figure 5, comporte les mêmes éléments que ceux indiqués figure 4. Mais son fonctionnement diffère de celui décrit en relation avec cette figure : le récepteur 51 ne reçoit que les signaux de type M4 émis par une balise simplifiée GBAS et les transmet comme précédemment au calculateur 6. Le récepteur 53 également actif, reçoit via les satellites SBAS, des signaux SBAS comprenant les informations de correction de position et le dispositif 52 détermine la position corrigée PC de l'aéronef et la transmet au calculateur 6. Selon ce mode de fonctionnement du récepteur MMR, les dispositifs de réception 51 et 53 fonctionnent simultanément.

La balise sol 100' selon l'invention est une balise de type GBAS simplifiée, comme représenté figure 6. Elle ne comporte pas comme représenté figure 3, le dispositif 3 apte à calculer les corrections qui sont émises par l'émetteur 1 sous la forme d'un message M1. Elle comprend le dispositif 2 apte à fournir les informations de trajectoires idéales qui sont émises par l'émetteur 1 sous la forme d'un message M4. Le message de type M4 est ainsi transmis sur le même canal de transmission VHF qu'une balise GBAS classique. L'équipage de l'aéronef sélectionne la trajectoire idéale désirée, sur instruction du service du contrôle aérien .

Selon un autre mode de réalisation de la balise 100', la trajectoire idéale désirée est sélectionnée au niveau de la balise sur instruction du service du contrôle aérien 400 : le message M4 ne comprend alors pas les autres trajectoires. L'instruction du service contrôle aérien transite par une liaison 46 entre les moyens de stockage 21 et le service 400. Il peut s'agir d'une liaison par voie filaire ou radio.

Une telle balise est évidemment moins coûteuse que celle présentée dans le préambule et les informations de correction sont, elles émises sous la forme d'un message M1' par la station centrale SBAS qui est déjà installée.

Cette balise 100' comporte avantageusement un dispositif 4' de contrôle de l'émission du message de type M4 par le service du contrôle aérien 400. Ce dispositif 4' aussi dénommé moniteur de position, est relié au service du contrôle aérien 400 par une liaison 45 filaire ou radio. Il comprend au moins un récepteur, par exemple deux récepteurs 41a et 41b de signaux radio-satellitaires de positionnement différentiel du système GNSS et des signaux SBAS comportant sous la forme d'un message M1', les corrections transmises par la station centrale SBAS via les satellites SBAS. Ces récepteurs sont respectivement munis d'une antenne 42a et 42b. Chaque récepteur 41a, 41b détermine la position corrigée de la balise à partir des signaux de positionnement et des corrections. Par ailleurs, la position de la balise est connue et stockée en mémoire dans la balise. Un calculateur 43 calcule la différence entre cette position connue et la position corrigée afin de déterminer l'intégrité du calcul de position. Lorsque l'intégrité est suffisante, c'est-à-dire lorsque les paramètres représentatifs de l'intégrité dépassent un seuil déterminé par le service du contrôle aérien, le message M4 est émis par l'émetteur 1 ; lorsqu'elle n'est pas suffisante, un commutateur coupe l'émission.

Le service du contrôle aérien reçoit divers paramètres dont les paramètres représentatifs de l'intégrité. Il peut aussi décider de couper l'émission par exemple en cas de vent, de brouillard, .... même lorsque l'intégrité semble suffisante. Finalement l'émission peut être coupée automatiquement ou sur intervention de ce service.

Le système GNSS peut être le système GPS, le système GALILEO, le système GLONASS ou tout autre système de positionnement par satellites.

L'aéronef est par exemple un avion ou un hélicoptère.

## Revendications

1. Procédé de guidage d'un aéronef en phase d'approche comportant les étapes consistant pour l'aéronef à :
recevoir des signaux radio-satellitaires de positionnement différentiel, et des informations de correction de ces signaux radio-satellitaires sous la forme d'un premier message (M1') provenant d'une station centrale sol d'un système d'augmentation de la précision du positionnement de type SBAS, c'est à dire émettant ces informations via des satellites géo-stationnaires de ce système d'augmentation,
calculer une position corrigée à partir des signaux de positionnement et des informations de correction, **caractérisé en ce qu'**il comporte les étapes consistant pour l'aéronef à :
recevoir des informations sur une trajectoire d'approche déterminée, ces informations étant contenues dans un deuxième message (M4) provenant d'une balise sol (100') émettant sur le même canal de transmission que celui d'une balise d'un système d'augmentation de la précision du positionnement de type GBAS,
calculer un écart de guidage vertical et horizontal de l'aéronef par rapport à la trajectoire d'approche déterminée, à partir de la position corrigée et des informations sur la trajectoire d'approche déterminée.

2. Balise sol (100') pour la mise en oeuvre du procédé selon la revendication 1, comportant des moyens de stockage (21) d'informations sur des trajectoires d'approche déterminées, des moyens de formattage (10) de ces informations sous la forme du deuxième message (M4), des moyens d'émission (1) du deuxième message (M4) sur le même canal de transmission que celui d'une balise d'un système d'augmentation de la précision du positionnement de type GBAS, **caractérisée en ce qu'**elle ne comporte pas de dispositif (3) apte à calculer des corrections qui sont émises par l'émetteur (1).

3. Balise sol (100') selon la revendication précédente, **caractérisée en ce qu'**elle comporte en outre des moyens de réception (42a, 42b) de signaux radio-satellitaires de positionnement différentiel et de réception d'informations de correction de ces signaux radio-satellitaires, ces informations provenant, via des satellites géostationnaires, d'une station centrale sol d'un système d'augmentation de la précision du positionnement de type SBAS, des moyens (41a, 41b) pour déterminer la position corrigée de la balise (100') à partir des signaux radios-satellitaires et des informations de correction, des moyens (47) de stockage de la position connue de la balise (100'), des moyens (43) pour déterminer l'intégrité du calcul de position en fonction de la position corrigée et de la position connue et des moyens (43) de contrôle de l'émission de la balise (100') à partir de l'intégrité.

4. Balise sol (100') selon la revendication précédente, **caractérisée en ce qu'**elle comporte une liaison (45) entre les moyens (43) de contrôle de l'émission de la balise et un service de contrôle aérien (400) en vue du contrôle de l'émission de la balise par le service de contrôle aérien.

5. Balise sol (100') selon l'une quelconque des revendications 2 à 4, **caractérisée en ce qu'**elle comporte une liaison (46) entre les moyens de stockage d'informations sur des trajectoires d'approche et un service de contrôle aérien (400) en vue de sélectionner une trajectoire déterminée parmi les trajectoires stockées.

## Claims

1. Procedure for guiding an aircraft in the approach phase comprising the steps consisting for the aircraft in:
receiving differential positioning satellite radio signals, and correction information from these satellite radio signals in the form of a first message (M1') originating from a ground central station of an SBAS type positioning accuracy augmentation system, that is to say transmitting this information via geostationary satellites of this augmentation system,
calculating a corrected position based on positioning signals and correction information,
**characterized in that** it comprises the steps conisisting for the aircraft in:
receiving information on a predefined approach path, this information being contained in a second message (M4) originating from a ground beacon (100') transmitting on the same transmission channel as that of a beacon of a GBAS type positioning accuracy augmentation system,
calculating an elevation and horizontal guidance deviation of the aircraft relative to the predefined approach path, based on the corrected position and information on the predefined approach path.

2. Ground beacon (100') for implementing the procedure according to Claim 1, comprising means (21) of storing information on predefined approach paths, means (10) of formatting this information in the form of the second message (M4), means (1) of transmitting the second message (M4) on the same transmission channel as that of a beacon of a GBAS type positioning accuracy augmentation system, **characterized in that** it does not comprise any device (3) able to calculate corrections which are transmitted by the transmitter (1).

3. Ground beacon (100') according to the preceding claim, **characterized in that** also comprises means (42a, 42b) of receiving differential positioning satellite radio signals and of receiving correction information from these satellite radio signals, this information originating, via geostationary satellites, from a ground central station of an SBAS type positioning accuracy augmentation system, means (41a, 41b) for determining the corrected position of the beacon (100') based on satellite radio signals and correction information, means (47) of storing the known position of the beacon (100'), means (43) for determining the integrity of the position calculation according to the corrected position and the known position and means (43) of controlling the transmission of the beacon (100') based on the integrity.

4. Ground beacon (100') according to the preceding claim, **characterized in that** it comprises a link (45) between the means (43) of controlling the transmission of the beacon and an air traffic control service (400) so that the transmission of the beacon can be controlled by the air traffic control service.

5. Ground beacon (100') according to any one of Claims 2 to 4, **characterized in that** it comprises a link (46) between the means of storing information on approach paths and an air traffic control service (400) so that a predefined path can be selected from the stored paths.

## Patentansprüche

1. Flugführungsverfahren eines Luftfahrzeugs in der Landephase, das die Schritte aufweist, die für das Flugzeug in Folgendem bestehen:
Empfangen differenzieller Funksatelliten-Positionierungssignale und Korrekturinformationen für diese Funksatellitensignale in Form einer ersten Mitteilung (M1'), die von einer Bodenzentralstation eines Systems zum Steigern der Präzision des Positionierens des Typs SBAS kommt, das heißt, das diese Informationen über geostationäre Satelliten dieses Steigerungssystems sendet,
Berechnen einer korrigierten Position ausgehend von den Positionierungssignalen und Korrekturinformationen, **dadurch gekennzeichnet, dass** es die Schritte aufweist, die für das Luftfahrzeug darin bestehen,
Informationen über eine bestimmte Anflugbahn zu empfangen, wobei diese Informationen in einer zweiten Mitteilung (M4) enthalten sind, die von einer Bodenbake (100') kommen, die auf dem gleichen Übertragungskanal sendet wie eine Bake eines Systems zum Steigern der Positionierungspräzision des Typs GBAS,
Berechnen einer vertikalen und horizontalen Führungsabweichung des Luftfahrzeugs im Vergleich zu der bestimmten Anflugbahn ausgehend von der korrigierten Position und von Informationen über die bestimmte Anflugbahn.

2. Bodenbake (100') für das Umsetzen des Verfahrens nach Anspruch 1, die Speichermittel (21) für Informationen über die bestimmten Anflugbahnen enthält, Formatierungsmittel (10) dieser Informationen in Form der zweiten Mitteilung (M4), Sendemittel (1) der zweiten Mitteilung (M4) auf dem gleichen Übertragungskanal wie der einer Bake eines Systems zum Steigern der Positionierungspräzision des Typs GBAS, **dadurch gekennzeichnet, dass** sie keine Vorrichtung (3) aufweist, die Korrekturen, die von dem Sender (1) gesendet werden, berechnen kann.

3. Bodenbake (100') nach dem vorhergehenden Anspruch, **dadurch gekennzeichnet, dass** sie ferner Empfangsmittel (42a, 42b) für differenzielle Funksatelliten-Positionierungssignale und zum Empfang von Korrekturinformationen für diese Funksatellitensignale aufweist, wobei diese Informationen über geostationäre Satelliten von einer zentralen Bodenstation eines Systems zum Steigern der Positionierungspräzision des Typs SBAS stammen, Mittel (41a, 41b), um die korrigierte Position der Bake (100') ausgehend von den Funksatellitensignalen und Korrekturinformationen zu bestimmen, Mittel (47) zum Speichern der bekannten Position der Bake (100'), Mittel (43) zum Bestimmen der Integrität der Positionsberechnung in Abhängigkeit von der korrigierten Position und der bekannten Position und Mittel (43) zum Steuern des Sendens der Bake (100') ausgehend von der Integrität.

4. Bodenbake (100') nach dem vorhergehenden Anspruch, **dadurch gekennzeichnet, dass** sie eine Verbindung (45) zwischen den Mitteln (43) zum Steuern des Sendens der Bake und einer Flugverkehrskontrollstelle (400) zum Steuern des Sendens der Bake durch die Flugverkehrskontrollstelle aufweist.

5. Bodenbake (100') nach einem der Ansprüche 2 bis 4, **dadurch gekennzeichnet, dass** sie eine Verbindung (46) zwischen den Speichermitteln für Informationen für Anflugbahnen und einer Flugverkehrskontrollstelle (400) zum Auswählen einer bestimmten Bahn aus den gespeicherten Bahnen aufweist.
